# EUROPÄISCHE PATENTSCHRIFT

(11) **EP 3 246 441 B1**
(45) Veröffentlichungstag und Bekanntmachung des Hinweises auf die Patenterteilung: **15.08.2018**
(21) Anmeldenummer: 16170259.2
(22) Anmeldetag: 19.05.2016
(51) Int. Cl.: D04B 37/00

(54) **ANLAGE ZUR HERSTELLUNG VON KETTENWIRKWAREN UND VERFAHREN ZUM STEUERN EINER ANLAGE ZUM HERSTELLEN VON KETTENWIRKWAREN**
PLANT FOR THE PRODUCTION OF WARP-KNITTED GOODS AND METHOD FOR CONTROLLING A FACILITY FOR PRODUCING WARP-KNITTED GOODS
INSTALLATION DE FABRICATION DE TISSUS EN MAILLES JETEES ET PROCEDE DE COMMANDE D'UNE INSTALLATION DE FABRICATION DE TISSUS EN MAILLES JETEES

(43) Veröffentlichungstag der Anmeldung: 22.11.2017
(73) Patentinhaber: Karl Mayer Textilmaschinenfabrik GmbH, 63179 Obertshausen (DE)
(72) Erfinder: Krakow, Oliver, 63067 Offenbach (DE)
(74) Vertreter: Keil & Schaafhausen Patent- und Rechtsanwälte PartGmbB

(56) Entgegenhaltungen:
- EP-A2- 0 525 514
- WO-A1-2004/053604

## Beschreibung

Die Erfindung betrifft eine Anlage zur Herstellung von Kettenwirkwaren mit mindestens einer Kettenwirkmaschine und einer Produktionsverwaltungseinrichtung, die eine Parameter-Eingabeeinrichtung zur Eingabe von Produktdaten aufweist.

Ferner betrifft die Erfindung ein Verfahren zum Steuern einer Anlage zum Herstellen von Kettenwirkwaren mit mindestens einer Kettenwirkmaschine. Eine entsprechende Anlage und ein zugehöriges Verfahren sind beispielsweise aus der WO 2004/053604 A1 bekannt. Wenn eine Kettenwirkware hergestellt werden soll, gibt man Produktdaten über die Parameter-Eingabeeinrichtung in die Produktionsverwaltungseinrichtung ein, die die Produktionsfeinplanung bzw. die Produktionsabstimmung übernimmt. So verteilt beispielsweise die Produktionsverwaltungseinrichtung bei der Verwendung von mehr als einer Kettenwirkmaschine die Produktion der Kettenwirkware auf die zur Verfügung stehenden Maschinen.

Im Zuge eines zunehmend härteren Wettbewerbs spielen die Produktionskosten eine immer größere Rolle. Dies gilt insbesondere dann, wenn eine Anlage zur Herstellung von Kettenwirkwaren nicht vollständig ausgelastet ist.

Der Erfindung liegt die Aufgabe zugrunde, einen wirtschaftlichen Betrieb einer derartigen Anlage zu ermöglichen.

Diese Aufgabe wird bei einer Anlage der eingangs genannten Art dadurch gelöst, dass die Parameter-Eingabeeinrichtung Mittel zur Eingabe eines Zeitbereichs aufweist, wobei die Produktionsverwaltungseinrichtung unter Berücksichtigung der Produktdaten und des Zeitbereichs mindestens einen Betriebsparameter der Kettenwirkmaschine so einstellt, dass der Energieverbrauch minimal ist.

Der Zeitbereich ist die Zeitdauer, die für die Produktion der Kettenwirkware zur Verfügung steht. Wenn eine Anlage zur Herstellung von Kettenwirkwaren nicht vollständig ausgelastet ist, dann ist der Zeitbereich vielfach größer als die Zeit, die man ohne weitere Eingriffe zur Herstellung der gewünschten Kettenwirkware benötigt. Wenn man nun die zur Verfügung stehende Zeit berücksichtigt, dann kann man den Energieverbrauch senken. Wenn beispielsweise die Kettenwirkmaschine über den gesamten Zeitbereich arbeiten kann, dann benötigt man keine Energie, um die Kettenwirkmaschine während Stillstandszeiten zu beheizen. Diese Energieeinsparung macht sich positiv bei den Kosten bemerkbar.

Vorzugsweise ist die Produktionsverwaltungseinrichtung mit einer Drehzahlsteuerung der Kettenwirkmaschine verbunden. Über die Drehzahlsteuerung der Kettenwirkmaschine lässt sich die Arbeitsgeschwindigkeit der Kettenwirkmaschine verändern. Wenn beispielsweise ein größerer Zeitbereich zur Verfügung steht, kann man die Arbeitsgeschwindigkeit der Kettenwirkmaschine absenken. In vielen Fällen verändert sich die Energieaufnahme der Kettenwirkmaschine nicht linear mit der Drehzahl, sondern sie steigt mit der Drehzahl überproportional stark an. Dementsprechend sinkt die Energieaufnahme auch überproportional stark, wenn die Drehzahl der Kettenwirkmaschine entsprechend vermindert wird. Die verminderte Energieaufnahme wirkt sich positiv auf die Kosten aus, d.h. man kann durch eine Verminderung der Drehzahl der Kettenwirkmaschine die zur Verfügung stehende Zeit, also den Zeitbereich, möglichst weitgehend ausnutzen und dabei gleichzeitig Kosten sparen.

Vorzugsweise weist die Produktionsverwaltungseinrichtung eine Speichereinrichtung auf, in der für jede Kettenwirkmaschine spezifische Betriebsdaten gespeichert sind. Der Benutzer kann über die Parameter-Eingabeeinrichtung den zur Verfügung stehenden Zeitbereich eingeben. Dieser Zeitbereich steht allerdings nicht vollständig für die Herstellung der Kettenwirkware zur Verfügung, weil während dieser Zeit auch organisatorische Maßnahmen berücksichtigt werden müssen, beispielsweise ein Baumwechsel. Derartige planbare Zeiten können von der Produktionsverwaltungseinrichtung ohne weiteres berücksichtigt werden. Daneben gibt es aber auch ungeplante Zeiten, in denen die Produktion der Kettenwirkware unterbrochen ist. Diese ungeplanten Zeiten ergeben sich beispielsweise durch einen Fadenbruch, einen Baumabriss oder dergleichen. Diese ungeplanten Stillstandszeiten lassen sich allerdings statistisch erfassen und jeder Kettenwirkmaschine zuordnen. Damit ist die Produktionsverwaltungseinrichtung in der Lage, mit den spezifischen Betriebsdaten die tatsächlich zur Verfügung stehende Zeit für die Produktion der Kettenwirkware zu ermitteln und die Maschine entsprechend einzustellen.

Hierbei ist bevorzugt, dass die Produktionsverwaltungseinrichtung Zeiten ermittelt, in denen die jeweilige Kettenwirkmaschine während eines Produktionslaufs ihren Betrieb ungeplant unterbricht, und diese Zeiten speichert. Damit ist die Anlage sozusagen selbstlernend. In vielen Fällen unterscheiden sich die ungeplanten Betriebsunterbrechungen von Maschine zu Maschine, bleiben aber für die jeweilige Maschine in einem gewissen Rahmen konstant.

Auch ist bevorzugt, dass die Produktionsverwaltungseinrichtung mit mindestens zwei Kettenwirkmaschinen verbunden ist und unter Berücksichtigung der Produktdaten und des Zeitbereichs jeweils mindestens einen Betriebsparameter der mindestens zwei Kettenwirkmaschinen so einstellt, dass der Energieverbrauch für die mindestens zwei Kettenwirkmaschinen minimal ist. Die Produktionsverwaltungseinrichtung kann damit die Produktion der gewünschten Kettenwirkware auf mehrere Maschinen verteilen und dabei die jeweiligen Maschinen so einstellen, dass der Energieverbrauch für die Anlage insgesamt minimal ist.

Die Aufgabe wird bei einem Verfahren der eingangs genannten Art dadurch gelöst, dass man aus Produktdaten der Kettenwirkwaren und einem Zeitbereich mindestens einen Betriebsparameter der Kettenwirkmaschine ermittelt, bei dem der Energieverbrauch minimal ist, und die Kettenwirkmaschine mit diesem Betriebsparameter betreibt.

Wie oben im Zusammenhang mit der Anlage ausgeführt, ist es auf diese Weise möglich, den Energieverbrauch der Kettenwirkmaschine dadurch zu senken, dass man den Zeitbereich, also die Zeit, die für die Produktion der jeweiligen Kettenwirkware zur Verfügung steht, möglichst weitgehend ausnutzt. Beispielsweise ist es möglich, Zwischenzeiten zu vermeiden oder jedenfalls kurz zu halten, in denen die Kettenwirkmaschine beheizt werden muss.

Vorzugsweise verwendet man zur Ermittlung des Betriebsparameters eine Produktionsverwaltungseinrichtung. Damit kann das Verfahren sozusagen automatisiert ablaufen. Der Benutzer muss lediglich die für die jeweilige Kettenwirkware benötigten Produktdaten und den Zeitbereich eingeben.

Vorzugsweise ist der Betriebsparameter die Drehzahl der Kettenwirkmaschine. Wie oben erläutert, ändert sich der Energieverbrauch oder die Energieaufnahme der Kettenwirkmaschine nicht proportional zur Drehzahl, sondern der Energieverbrauch nimmt mit steigender Drehzahl überproportional zu. In gleicher Weise sinkt er mit abnehmender Drehzahl überproportional. Wenn man also die Drehzahl vermindert, dann kann man eine überproportionale Verminderung des Energieverbrauchs erreichen. Dabei ergeben sich auch dann Einsparungen an Energie, wenn die zur Produktion insgesamt benötigte Zeit länger ist als bei einer höheren Drehzahl.

Vorzugsweise verwendet man zur Ermittlung des Betriebsparameters gespeicherte Betriebsdaten der Kettenwirkmaschine. Zu den gespeicherten Betriebsdaten gehören beispielsweise ungeplante Stillstandszeiten, die beispielsweise durch einen Fadenbruch oder einen Baumabriss verursacht werden. Diese Betriebsdaten können für jede Kettenwirkmaschine individuell ermittelt und gespeichert werden.

Hierbei ist bevorzugt, dass man aus ungeplanten Stillstandszeiten der Kettenwirkmaschine die gespeicherten Betriebsdaten ermittelt. Damit ergibt sich ein sozusagen selbstlernendes System, das für jede Kettenwirkmaschine individuell statistisch die Länge der ungeplanten Betriebsunterbrechungen ermittelt, so dass diese Stillstandszeiten bei der Planung der Herstellung der Kettenwirkwaren berücksichtigt werden können.

Vorzugsweise stellt man bei Verwendung von mindestens zwei Kettenwirkmaschinen unter Berücksichtigung der Produktdaten und des Zeitbereichs jeweils mindestens einen Betriebsparameter der mindestens zwei Kettenwirkmaschinen so ein, dass der Energieverbrauch für die mindestens zwei Kettenwirkmaschinen insgesamt minimal ist. Damit gilt die Energieeinsparung auch dann, wenn man mehrere Kettenwirkmaschinen verwendet.

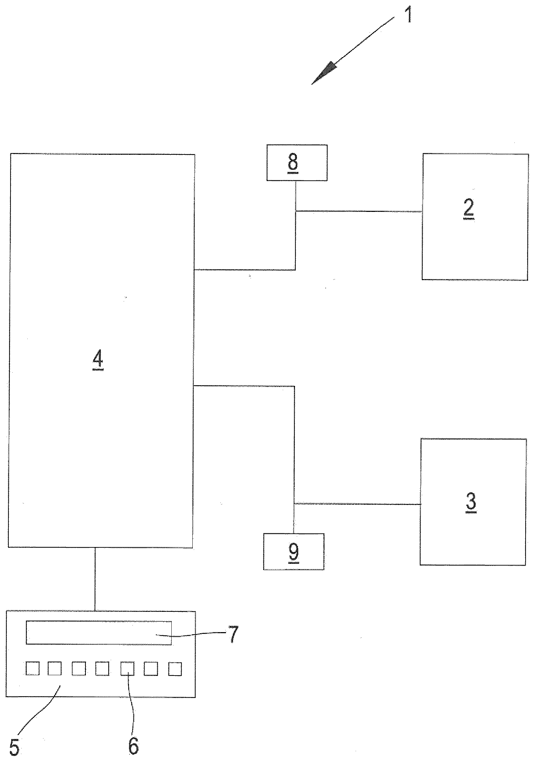

Die Erfindung wird im Folgenden anhand eines bevorzugten Ausführungsbeispiels in Verbindung mit der Zeichnung beschrieben. Hierin zeigt:
- die einzige Fig.: eine schematische Darstellung einer Anlage zur Herstellung von Kettenwirkwaren.

Eine in der Figur schematisch dargestellte Anlage 1 zur Herstellung von Kettenwirkwaren weist zwei Kettenwirkmaschinen 2, 3 auf, die mit einer gemeinsamen Produktionsverwaltungseinrichtung 4 verbunden ist. Die Produktionsverwaltungseinrichtung 4 weist eine Parameter-Eingabeeinrichtung 5 auf. Die Parameter-Eingabeeinrichtung 5 kann auch Bestandteil der Produktionsverwaltungseinrichtung 4 sein. Die Parameter-Eingabeeinrichtung 5 weist mehrere Tasten 6 und ein Display 7 auf. Die Produktionsverwaltungseinrichtung 4 kann auch an einer der Kettenwirkmaschinen 2, 3 angeordnet sein.

Über die Parameter-Eingabeeinrichtung 5 können beispielsweise Produktdaten eingegeben werden, also Daten, die beispielsweise die gewünschte Länge der zu erzeugenden Kettenwirkwaren definieren. Darüber hinaus ist es mit der Parameter-Eingabeeinrichtung auch möglich, einen Zeitbereich einzugeben, der für die Produktion der Kettenwirkware zur Verfügung steht.

Die Produktionsverwaltungseinrichtung 4 weist für jede Kettenwirkmaschine 2, 3 eine Speichereinrichtung 8, 9 auf, in der Betriebsdaten gespeichert sind. Zu den Betriebsdaten gehören beispielsweise der so genannte AZ-Wert, also ein Warenabzugswert in Maschen pro Zentimeter, die maximal mögliche Maschinendrehzahl in Umdrehungen pro Minute, ein Einsprung in der Länge, der in Prozent angegeben wird. Ferner gehört in diesem Ausführungsbeispiel zu den Betriebsdaten auch eine Größe, die als Effektivität bezeichnet wird. Bei der Effektivität berücksichtigt man geplante Stillstandszeiten der Maschine, die begründet sind durch organisatorische Tätigkeiten, beispielsweise einen Baumwechsel. Zu den Größen, die die Effektivität beeinflussen, gehören auch ungeplante Stillstandszeiten der Kettenwirkmaschine, die beispielsweise durch einen Fadenbruch oder einen Baumabriss verursacht werden.

Die Produktionsverwaltungseinrichtung 4 kann nun Zeiten ermitteln, in denen die jeweilige Kettenwirkmaschine 2, 3 während eines Produktionslaufs ihren Betrieb ungeplant unterbricht, und diese Zeiten speichern. Daraus lassen sich dann in den Speichereinrichtungen 8, 9 statistische Mittelwerte speichern, die für jede der Kettenwirkmaschinen 2, 3 signifikant sind.

In einem Beispiel sollen 10.000 m Kettenwirkware produziert werden, wobei ein Zeitbereich von 400 Stunden zur Verfügung steht.

Die in diesem Beispiel verwendete Kettenwirkmaschine hat eine maximale Drehzahl von 4400 U/min. Bei dieser Drehzahl würde die Produktion in etwa 355 Std. abgewickelt werden können. Bei dieser Drehzahl von 4400 U/min ergeben sich beispielsweise Energie-Kosten in Höhe von 3,42 Euro pro Std. multipliziert mit der Produktionszeit von 355 Std. ergeben sich somit Gesamtkosten in Höhe von 1.214,10 Euro für die elektrische Energie.

Wenn erst nach dem oben angegebenen Zeitbereich von 400 Std. erneut ein weiterer Auftrag zur Produktion von Kettenwirkware ansteht, muss die Kettenwirkmaschine über 45 Std. beheizt werden, wobei 0,60 Euro pro Std. an Kosten für die für die Beheizung notwendige Energie hinzukommen.

Wenn man hingegen den Zeitbereich von 400 Std. für die Produktion vollständig oder nahe vollständig ausnutzt, wobei natürlich die geplanten und die ungeplanten Stillstandszeiten berücksichtigt werden, kann man die Drehzahl der Maschinen auf etwa 3900 U/min absenken. Dadurch ergeben sich Energie-Kosten in Höhe von 2,80 Euro pro Std. Multipliziert mit dem Zeitbereich von 400 Std. ergeben sich so Kosten in Höhe von 1.120,00 Euro für die elektrische Energie.

In diesem Beispiel beträgt die Differenz nur 0,62 Euro pro Std. Hinzu kommt allerdings die eingesparte Heizleistung mit Kosten in Höhe von 27 Euro. Wenn man eine Jahresgesamtbetriebslaufzeit einer typischen Kettenwirkmaschine von etwa 7500 Std. ansetzt, ergibt sich eine jährliche Ersparnis von etwa 4.650,00 Euro. Hinzu kommen die Kosten, die man einspart, weil man die Kettenwirkmaschine während Stillstandszeiten nicht mehr beheizen muss.

## Patentansprüche

1. Anlage (1) zur Herstellung von Kettenwirkwaren mit mindestens einer Kettenwirkmaschine (2, 3) und einer Produktionsverwaltungseinrichtung (4), die eine Parameter-Eingabeeinrichtung (5) zur Eingabe von Produktdaten aufweist, **dadurch gekennzeichnet, dass** die Parameter- Eingabeeinrichtung (5) Mittel zur Eingabe eines Zeitbereichs aufweist, wobei die Produktionsverwaltungseinrichtung (4) unter Berücksichtigung der Produktdaten und des Zeitbereichs mindestens einen Betriebsparameter der Kettenwirkmaschine (2, 3) so einstellt, dass der Energieverbrauch minimal ist.

2. Anlage nach Anspruch 1, **dadurch gekennzeichnet, dass** die Produktionsverwaltungseinrichtung (4) mit einer Drehzahlsteuerung der Kettenwirkmaschine (2, 3) verbunden ist.

3. Anlage nach Anspruch 1 oder 2, **dadurch gekennzeichnet, dass** die Produktionsverwaltungseinrichtung (4) eine Speichereinrichtung (8, 9) aufweist, in der für jede Kettenwirkmaschine (2, 3) spezifische Betriebsdaten gespeichert sind.

4. Anlage nach einem der Ansprüche 1 bis 3, **dadurch gekennzeichnet, dass** die Produktionsverwaltungseinrichtung (4) Zeiten ermittelt, in denen die jeweilige Kettenwirkmaschine (2, 3) während eines Produktionslaufs ihren Betrieb ungeplant unterbricht, und diese Zeiten speichert.

5. Anlage nach einem der Ansprüche 1 bis 4, **dadurch gekennzeichnet, dass** die Produktionsverwaltungseinrichtung (4) mit mindestens zwei Kettenwirkmaschinen (2, 3) verbunden ist und unter Berücksichtigung der Produktdaten und des Zeitbereichs jeweils mindestens einen Betriebsparameter der mindestens zwei Kettenwirkmaschinen (2, 3) so einstellt, dass der Energieverbrauch für die mindestens zwei Kettenwirkmaschinen (2, 3) insgesamt minimal ist.

6. Verfahren zum Steuern einer Anlage zum Herstellen von Kettenwirkwaren mit mindestens einer Kettenwirkmaschine (2, 3), bei dem man aus Produktdaten der Kettenwirkwaren und einem Zeitbereich mindestens einen Betriebsparameter der Kettenwirkmaschine (2, 3) ermittelt, bei dem der Energieverbrauch minimal ist, und die Kettenwirkmaschine (2, 3) mit diesem Betriebsparameter betreibt.

7. Verfahren nach Anspruch 6, **dadurch gekennzeichnet, dass** man zur Ermittlung des Betriebsparameters eine Produktionsverwaltungseinrichtung (4) verwendet.

8. Verfahren nach Anspruch 6 oder 7, **dadurch gekennzeichnet, dass** der Betriebsparameter die Drehzahl der Kettenwirkmaschine (2, 3) ist.

9. Verfahren nach einem der Ansprüche 6 bis 8, **dadurch gekennzeichnet, dass** man zur Ermittlung des Betriebsparameters gespeicherte Betriebsdaten der Kettenwirkmaschine (2, 3) verwendet.

10. Verfahren nach Anspruch 9, **dadurch gekennzeichnet, dass** man aus ungeplanten Stillstandzeiten der Kettenwirkmaschine (2, 3) die gespeicherten Betriebsdaten ermittelt.

11. Verfahren nach einem der Ansprüche 6 bis 10, **dadurch gekennzeichnet, dass** man bei Verwendung von mindestens zwei Kettenwirkmaschinen (2, 3) unter Berücksichtigung der Produktdaten und des Zeitbereichs jeweils mindestens einen Betriebsparameter der mindestens zwei Kettenwirkmaschinen (2, 3) so einstellt, dass der Energieverbrauch für die mindestens zwei Kettenwirkmaschinen (2, 3) insgesamt minimal ist.

## Claims

1. Plant (1) for the production of warp-knitted goods with at least one warp-knitting machine (2, 3) and a production management means (4), which has a parameter input means (5) for inputting product data, **characterised in that** the parameter input means (5) have means for inputting a time range, wherein the production management means (4), taking into consideration the product data and time range, set at least one operational parameter of the warp-knitting machine (2, 3) in such a way that the energy usage is minimal.

2. Plant according to claim 1, **characterised in that** the production management means (4) are connected with a speed control of the warp-knitting machine (2, 3).

3. Plant according to claim 1 or 2, **characterised in that** the production management means (4) have a storage means (8, 9) in which for each warp-knitting machine (2, 3) specific operational data are stored.

4. Plant according to one of claims 1 to 3, **characterised in that** the production management means (4) determine times in which the respective warp-knitting machine (2, 3) stops operating in an unscheduled manner during a production run, and save these times.

5. Plant according to one of claims 1 to 4, **characterised in that** the production management means (4) are connected with at least two warp-knitting machines (2, 3) and taking into consideration the product data and the time range determine in each case at least one operational parameter of the at least two warp-knitting machines (2, 3) in such a way that the energy usage for the at least two warp-knitting machines (2, 3) in total is minimal.

6. Method for controlling a plant for the production of warp-knitted goods with at least one warp-knitting machine (2, 3), in which one determines from product data of the warp-knitted goods and one time range at least one operational parameter of the warp-knitting machine (2, 3), in which the energy usage is minimal, and operates the warp-knitting machine (2, 3) with this operational parameter.

7. Method according to claim 6, **characterised in that** one uses for determining the operational parameter a production management means (4).

8. Method according to claim 6 or 7, **characterised in that** the operational parameter is the speed of the warp-knitting machine (2, 3).

9. Method according to one of claims 6 to 8, **characterised in that** one uses for determining the operational parameter saved operational data of the warp-knitting machine (2, 3).

10. Method according to claim 9, **characterised in that** one determines the saved operational data from unscheduled stoppage times of the warp-knitting machine (2, 3).

11. Method according to one of claims 6 to 10, **characterised in that** when using at least two warp-knitting machines (2, 3), one sets in each case at least one operational parameter of the at least two warp-knitting machines (2, 3) under consideration of the product data and the time range in such a way that the energy usage for the at least two warp-knitting machines (2, 3) in total is minimal.

## Revendications

1. Installation (1) de fabrication de tricots à mailles jetées avec au moins un métier de tricotage à mailles jetées (2, 3) et un dispositif de gestion de production (4) qui présente un dispositif de saisie de paramètres (5) pour saisir des données de produits, **caractérisée en ce que** le dispositif de saisie de paramètres (5) présente des moyens de saisie d'une plage de temporisation, dans laquelle le dispositif de gestion de production (4) règle, en tenant compte des données de produits et de la plage de temporisation, au moins un paramètre d'exploitation du métier de tricotage à mailles jetées (2, 3) de sorte que la consommation d'énergie soit minimale.

2. Installation selon la revendication 1, **caractérisée en ce que** le dispositif de gestion de production (4) est relié à une commande de vitesse de rotation du métier de tricotage à mailles jetées (2, 3).

3. Installation selon la revendication 1 ou 2, **caractérisée en ce que** le dispositif de gestion de production (4) présente un dispositif de mémorisation (8, 9) dans lequel des données d'exploitation spécifiques sont mémorisées pour chaque métier de tricotage à mailles jetées (2, 3).

4. Installation selon l'une quelconque des revendications 1 à 3, **caractérisée en ce que** le dispositif de gestion de production (4) détermine des moments dans lesquels le métier de tricotage à mailles jetées (2, 3) respectif interrompt de manière non programmée son fonctionnement au cours d'un déroulement de la production et mémorise ces moments.

5. Installation selon l'une quelconque des revendications 1 à 4, **caractérisée en ce que** le dispositif de gestion de production (4) est relié à au moins deux métiers de tricotage à mailles jetées (2, 3) et règle en tenant compte des données de production et de la marge de temporisation respectivement au moins un paramètre d'exploitation des au moins deux métiers de tricotage à mailles jetées (2, 3) de sorte que la consommation d'énergie pour les au moins deux métiers de tricotage à mailles jetées (2, 3) soit minimale au total.

6. Procédé de commande d'une installation de fabrication de tricots à mailles jetées avec au moins un métier de tricotage à mailles jetées (2, 3), dans lequel on détermine à partir de données de produits des tricots à mailles jetées et d'une plage de temporisation au moins un paramètre d'exploitation du métier de tricotage à mailles jetées (2, 3), dans lequel la consommation d'énergie est minimale et l'on exploite le métier de tricotage à mailles jetées (2, 3) avec ce paramètre d'exploitation.

7. Procédé selon la revendication 6, **caractérisé en ce que** l'on utilise pour déterminer le paramètre d'exploitation un dispositif de gestion de production (4).

8. Procédé selon la revendication 6 ou 7, **caractérisé en ce que** le paramètre d'exploitation est la vitesse de rotation du métier de tricotage à mailles jetées (2, 3).

9. Procédé selon l'une quelconque des revendications 6 à 8, **caractérisé en ce que** l'on utilise pour déterminer le paramètre d'exploitation des données d'exploitation mémorisées du métier de tricotage à mailles jetées (2, 3).

10. Procédé selon la revendication 9, **caractérisé en ce que** l'on détermine à partir de moments d'arrêt non programmés du métier de tricotage à mailles jetées (2, 3) les données d'exploitation mémorisées.

11. Procédé selon l'une quelconque des revendications 6 à 10, **caractérisé en ce que**, lors de l'utilisation d'au moins deux métiers de tricotage à mailles jetées (2, 3), l'on règle en tenant compte des données de produits et de la marge de temporisation, respectivement, au moins un paramètre d'exploitation des au moins deux métiers de tricotage à mailles jetées (2, 3) de sorte que la consommation d'énergie pour les au moins deux métiers de tricotage à mailles jetées (2, 3) soit minimal au total.
